# EUROPEAN PATENT SPECIFICATION

(11) **EP 3 564 745 B1**
(45) Date of publication and mention of the grant of the patent: **04.05.2022**
(21) Application number: 19020325.7
(22) Date of filing: 12.02.2013
(51) Int. Cl.: G02F 1/167, G02B 26/00, G02B 27/60

(54) **MICROCUPS DESIGNS FOR ELECTROPHORETIC DISPLAY**
MIKRONAPFENTWÜRFE FÜR EINE ELEKTROPHORETISCHE ANZEIGE
CONCEPTIONS DE MICROCOUPELLES POUR AFFICHAGE ÉLECTROPHORÉTIQUE

(30) Priority: 14.02.2012 US 201261598725 P
(43) Date of publication of application: 06.11.2019
(62) Divisional of application: 13748465.5
(73) Proprietor: E Ink California, LLC, Fremont, CA 94538 (US)
(72) Inventor: YANG, Bo-Ru, Banqiao City (TW); LIN, Craig, San Jose, CA 95131 (US); KANG, Yih-Ming, Fremont, CA 94539 (US)
(74) Representative: Cole, David John

(56) References cited:
- EP-A2- 2 291 704
- WO-A1-01/67170
- US-A1- 2004 160 187

## Description

The present invention is directed to microcup designs for electrophoretic displays, aiming to both reduce noticeable defects of display images and avoid Moire effects.

US Patent No. 6,930,818 discloses an electrophoretic display based on the microcup technology. The patent describes the manufacture of microcups as display cells, by microembossing or imagewise exposure. The microcups are then filled with an electrophoretic fluid comprising charged pigment particles dispersed in a solvent or solvent mixture.

The top openings of the microcups traditionally may have the same size and shape and such microcups spread across the entire display surface. For example, all of the microcups may have a top opening of a square shape or all of the microcups may have a top opening of a hexagonal shape, on the viewing side.

For this traditional type of design, because the microcups are not randomized, the Moire pattern can occur when the microcup film is laminated to a TFT backplane which also has a repeatable regular pattern. If a color filter is utilized in such a display device, the Moire pattern is even more severe because the color filter also has a repeatable regular pattern.

By rotating the microcups to a less severe angle, the Moire phenomenon may be reduced. However, such structural changes could reduce the cutting yield and also because the rotation angle must be precise, it could increase the processing cost.

US 2004/0160187 A1 describes ribs for an image display medium, which ribs can be retained between a pair of substrates. These image display medium ribs are formed by liquid injection molding, using a heat-curable epoxy resin. In addition, the image display medium ribs are formed so as to have a cell-form arrangement. Figure 7 of this document shows a microcell display having both square and rectangular cells, while Figure 11 shows a similar display in which the walls between adjacent microcells are wavy.

EP 2 291 704 A2 (WO 2009/153701 A2) describes an appearance-modifying device which uses a microcell imaging layer formed from a spacer structure disposed between two substrates to form (typically) hexagonal cells. The documents states that the spacer structure may be provided on periodic or non-periodic basis and may advantageously be non-rectangular, for example a hexagonal pattern or a non-repeating Penrose tiling.

The present invention is directed to an electrophoretic display film comprising microcups, wherein at least a plurality of the microcups each comprise a wavy partition wall, and wherein wavy partition walls in different microcups differ from each other in at least one of pitch and amplitude, where pitch means the distance between successive points at which the wavy partition wall crosses the path of a straight reference line extending between the same vertices as the wavy partition wall and amplitude refers to maximum distance between the wavy partition wall and the aforementioned straight reference line.

In one embodiment, pitches of the wavy partition walls are different.

In one embodiment, amplitudes of the wavy partition walls are different.

In one embodiment, pitches of the wavy partition walls are different and amplitudes of the wavy partition walls are the same.

In one embodiment, amplitudes of the wavy partition walls are different and pitches of the wavy partition walls are the same.

In one embodiment, amplitudes of the wavy partition walls are different and pitches of the wavy partition walls are different.

In one embodiment, at least one of the microcups has a square opening and at least one set of the parallel partition walls is wavy.

In one embodiment, at least one of the microcups has a hexagonal opening and at least one set of the parallel partition walls is wavy.

In one embodiment, the wavy partition wall has a pitch ranging from 5 µm-2000 µm

In one embodiment, the wavy partition wall has an amplitude ranging from 0.1 µm to 20 µm.

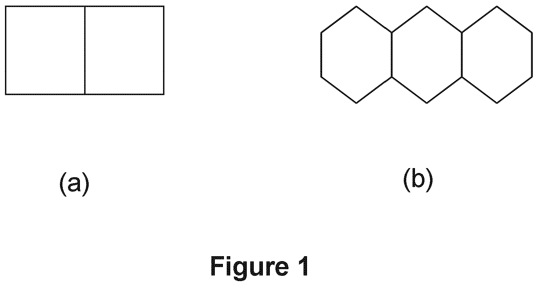

Figure 1 depicts microcups having (a) a square opening and (b) a hexagonal opening, respectively.
Figure 2 is a three-dimensional view of a microcup film with wavy partition walls.
Figure 3 is a top plan view of a microcup film with wavy partition walls.
Figure 4 depicts the pitches and amplitudes of a wavy partition wall.
Figure 5 depicts microcups with wavy partition walls.

The present invention is intended to minimize the Moire pattern or visual defects in a display device by randomizing the partition walls of microcups.

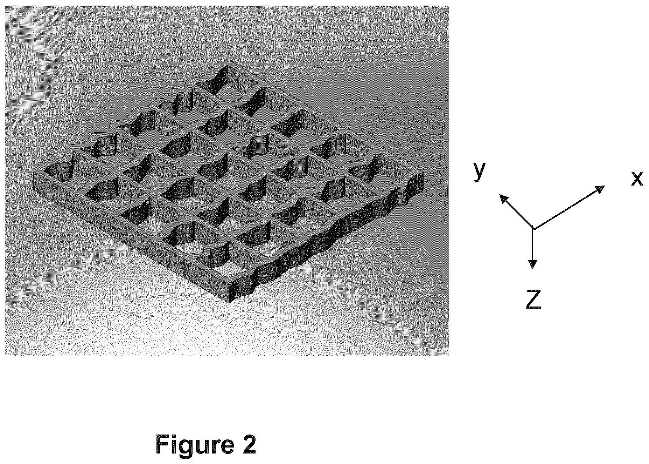

The present invention is directed to altering the partition walls of microcups. Figure 2 is a three-dimensional view in which the partition walls along one of the axes of the microcups (e.g., the X-axis) are pseudo-random while the partition walls along the Y axis are still straight lines.

This alteration only occurs on the X/Y plane; but not on the Z axis, which means the height of the microcup walls will be kept unchanged.

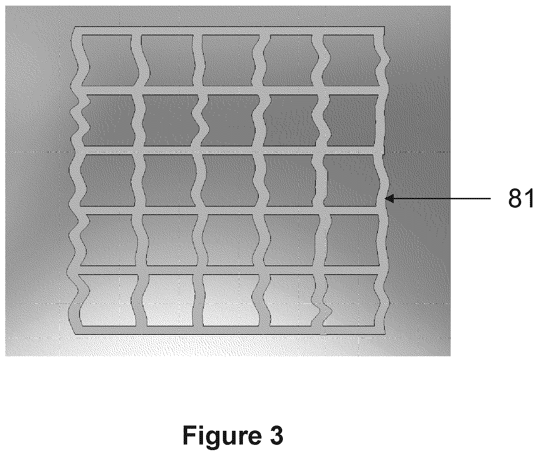

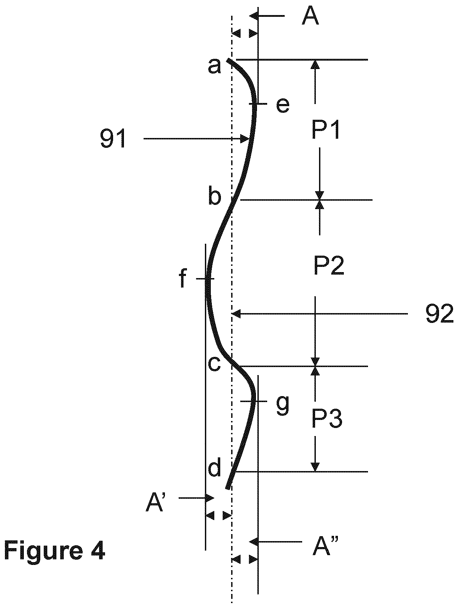

Figure 3 is the top view of this microcup design and it can be seen that the pitch may vary from one curvature in a microcup wall to another curvature in the same microcup wall. This is further illustrated in Figure 4 which depicts a wavy microcup wall (91) which is the wall (81) depicted in Figure 3.

For illustration purpose, there is a vertical reference line (92) which intersects the wavy wall (91) at four points, "a", "b", "c" and "d". The distance between point "a" and "b" is a first pitch P1; the distance between point "b" and "c" is a second pitch P2; and the distance between point "c" and "d" is a third pitch P3. In the context of the present invention, P1, P2 and P3 are preferably different. In another embodiment, at least two of them may be equal.

Another parameter defining the wavy microcup wall is the amplitude, which is the distance between the reference line 92 and the outer-most point on a curvature in the wavy wall 91. As shown in Figure 4, there are three outer-most points on the wave wall, "e", "f" and "g". The distance between the reference line 92 and point "e" is a first amplitude A; the distance between the reference line 92 and point "f" is a second amplitude A'; and the distance between the reference line 92 and point "g" is a third amplitude A". In the context of the present invention, A, A' and A" are preferably different. In another embodiment, at least two of them may be equal.

In one embodiment, the pitches P1=P2=P3 and A≠A'≠A". In another embodiment, A=A'=A" and P1≠P2≠P3. In a further embodiment, P1≠P2≠P3 and A≠A'≠A".

Some of the partition walls are shown to be wavy in a top view in Figure 3. However it is noted that the curvature extends throughout the depth of the entire wall area, as shown in Figure 2.

In the present design, the pitch can range from 5 µm-2000 µm, while amplitude can vary from 0.1 µm to 20 µm. The pitch and the amplitude, as explained above, may be independently varied.

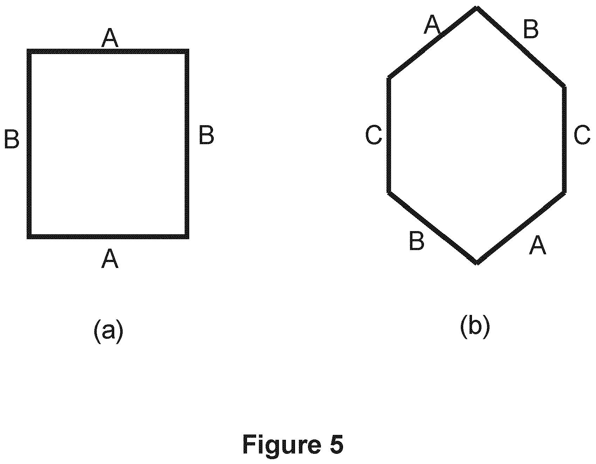

In one embodiment of the present design, the wavy walls only occur in one axis. However they may also occur in both axes. Figure 5a depicts a microcup having a square opening. In this case, there are two sets of partition walls, A and B. Each set has two partition walls which are parallel to each other. According to the present invention, set A of both partition walls may be wavy, or set B of both partition walls may be wavy, or both sets of the partition walls may be wavy.

The top opening of the microcups may be hexagonal or any other shapes. Figure 5b depicts a microcup having a hexagonal top opening. In this case, there three sets of parallel partition walls, A, B and C. According to the present invention, at least one set of the partition walls is wavy. In other words, there may be only one set of partition walls is wavy, or two of the three sets of the partition walls are wavy, or all three sets of the partition walls are wavy.

The designs of the present invention may reduce the Moire pattern. In addition, the randomized microcups or wavy partition walls will result in a fuzzy appearance that the regular shaped microcups do not have, and therefore any small defects (such as scratch or dust) are less noticeable.

The microcups of the present invention may be manufactured by the microembossing process described in US Patent No. 6,930,818. The formed microcups may then be filled and sealed also according to disclosures in this US patent.

## Claims

1. An electrophoretic display film comprising microcups, wherein at least a plurality of the microcups each comprise a wavy partition wall (81; 91), and wherein wavy partition walls in different microcups differ from each other in at least one of pitch (P1, P2, P3) and amplitude (A, A', A"), where pitch means the distance between successive points at which the wavy partition wall (81; 91) crosses the path of a straight reference line (92) extending between the same vertices as the wavy partition wall (81; 91) and amplitude (A, A', A") refers to maximum distance between the wavy partition wall (81; 91) and the aforementioned straight reference line (92).

2. The display film of Claim 1, wherein the wavy partition walls (91) in different microcups differ from each other in pitch (P1, P2, P3).

3. The display film of Claim 1, wherein the wavy partition walls (91) in different microcups differ from each other in amplitude (A, A', A").

4. The display film of Claim 1, wherein the wavy partition walls (91) in different microcups differ from each other in both amplitude (A, A', A") and pitch (P1, P2, P3).

5. The display film of Claim 1, wherein at least one of the microcups has a substantially square or hexagonal opening and at least one set of the parallel partition walls in the square or hexagonal opening is wavy.

6. The display film of Claim 1, wherein at least one wavy partition wall (91) has a pitch (P1, P2, P3) ranging from 5 µm-2000 µm.

7. The display film of Claim 1, wherein at least wavy partition wall has an amplitude ranging from 0.1µm to 20µm.

## Patentansprüche

1. Elektrophoretische Anzeigefolie, Mikronäpfe umfassend, wobei mindestens mehrere der Mikronäpfe jeweils eine wellige Trennwand (81; 91) umfassen und wobei sich wellige Trennwände in verschiedenen Mikronäpfen mindestens entweder in einem Rastermaß (P1, P2, P3) oder in einer Amplitude (A, A', A") voneinander unterscheiden, wobei Rastermaß die Entfernung zwischen aufeinanderfolgenden Punkten bedeutet, an denen die wellige Trennwand (81; 91) den Weg einer geraden Referenzlinie (92) kreuzt, die sich zwischen den gleichen Vertices wie die wellige Trennwand (81; 91) erstreckt, und Amplitude (A, A', A") eine maximale Entfernung zwischen der welligen Trennwand (81; 91) und der obenstehend beschriebenen geraden Referenzlinie (92) bezeichnet.

2. Anzeigefolie nach Anspruch 1, wobei sich die welligen Trennwände (91) in verschiedenen Mikronäpfen im Rastermaß (P1, P2, P3) voneinander unterscheiden.

3. Anzeigefolie nach Anspruch 1, wobei sich die welligen Trennwände (91) in verschiedenen Mikronäpfen in der Amplitude (A, A', A") voneinander unterscheiden.

4. Anzeigefolie nach Anspruch 1, wobei sich die welligen Trennwände (91) in verschiedenen Mikronäpfen sowohl in der Amplitude (A, A', A") als auch im Rastermaß (P1, P2, P3) voneinander unterscheiden.

5. Anzeigefolie nach Anspruch 1, wobei mindestens einer der Mikronäpfe eine im Wesentlichen quadratische oder sechseckige Öffnung aufweist und mindestens ein Satz der parallelen Trennwände in der quadratischen oder sechseckigen Öffnung wellig ist.

6. Anzeigefolie nach Anspruch 1, wobei mindestens eine wellige Trennwand (91) ein Rastermaß (P1, P2, P3) im Bereich von 5 µm bis 2000 µm aufweist.

7. Anzeigefolie nach Anspruch 1, wobei mindestens eine wellige Trennwand eine Amplitude im Bereich von 0,1 µm bis 20 µm aufweist.

## Revendications

1. Film d'affichage électrophorétique comprenant des microcoupelles, au moins une pluralité des microcoupelles comprenant chacune une paroi de séparation ondulée (81 ; 91), et les parois de séparation ondulées dans différentes microcoupelles différant les unes des autres par le pas (P1, P2, P3) et/ou l'amplitude (A, A', A"), le pas signifiant la distance entre points successifs auxquels la paroi de séparation ondulée (81 ; 91) croise le chemin d'une ligne droite de référence (92) s'étendant entre les mêmes sommets que la paroi de séparation ondulée (81 ; 91), et l'amplitude (A, A', A") faisant référence à la distance maximale entre la paroi de séparation ondulée (81 ; 91) et la ligne droite de référence (92) susmentionnée.

2. Film d'affichage de la revendication 1, dans lequel les parois de séparation ondulées (91) dans différentes microcoupelles diffèrent les unes des autres par le pas (P1, P2, P3).

3. Film d'affichage de la revendication 1, dans lequel les parois de séparation ondulées (91) dans différentes microcoupelles diffèrent les unes des autres par l'amplitude (A, A', A").

4. Film d'affichage de la revendication 1, dans lequel les parois de séparation ondulées (91) dans différentes microcoupelles diffèrent les unes des autres à la fois par l'amplitude (A, A', A") et le pas (P1, P2, P3).

5. Film d'affichage de la revendication 1, dans lequel au moins une des microcoupelles a une ouverture sensiblement carrée ou hexagonale et au moins un ensemble des parois de séparation parallèles dans l'ouverture carrée ou hexagonale est ondulé.

6. Film d'affichage de la revendication 1, dans lequel au moins une paroi de séparation ondulée (91) a un pas (P1, P2, P3) allant de 5 µm à 2000 µm.

7. Film d'affichage de la revendication 1, dans lequel au moins une paroi de séparation ondulée a une amplitude allant de 0,1 µm à 20 µm.
